# EUROPÄISCHE PATENTANMELDUNG

(11) **EP 1 147 954 A2**
(43) Veröffentlichungstag der Anmeldung: **24.10.2001**
(21) Anmeldenummer: 01100357.1
(22) Anmeldetag: 05.01.2001
(51) Int. Cl.: B60S 1/20

(54) **Scheibenwischeinrichtung, insbesondere zum Wischen von Scheiben eines Kraftfahrzeugs**

(30) Priorität: 20.04.2000 DE 10019751
(71) Anmelder: ROBERT BOSCH GMBH, 70442 Stuttgart (DE)
(72) Erfinder: Neubauer, Achim, 76149 Karlsruhe (DE); Bolz, Martin-Peter, 77815 Buehl (DE)

(57) **Zusammenfassung**

Scheibenwischeinrichtung, insbesondere zum Wischen von Scheiben eines Kraftfahrzeugs, mit einem Elektromotor (10), mindestens einer Wischerwelle (16), mit welcher ein Wischer (20) drehfest verbunden ist und einem mindestens ein Zugmittel (12) aufweisenden und damit die Wischerwelle (16) antreibenden Getriebe, wobei der Elektromotor (10) als Reversiermotor ausgebildet ist.

## Beschreibung

### Stand der Technik

Die Erfindung betrifft eine Scheibenwischeinrichtung, insbesondere zum Wischen von Scheiben eines Kraftfahrzeugs mit einem Elektromotor und einem Zugmittel nach Gattung des unabhängigen Anspruchs. Es ist schon eine derartige Scheibenwischeinrichtung aus der DE 873 951 bekannt. Die dort vorgestellte Lösung ist jedoch wartungsintensiv, fehleranfällig und entspricht den Anforderungen an ein modernes Wischersystem, wie beispielsweise Schneelastsicherung und Blockierschutz, nicht.

### Vorteile der Erfindung

Die erfindungsgemäße Scheibenwischeinrichtung mit den Merkmalen des Hauptanspruches hat den Vorteil, daß durch den Einsatz eines Reversiermotors eine flexible Scheibenwischanlage, die sich auf kleinstem Bauraum unterbringen läßt, gezeigt ist.

Durch die in den Unteransprüchen aufgeführten Maßnahmen ergeben sich vorteilhafte Weiterbildungen und Verbesserungen der im Hauptanspruch angegebenen Merkmale.

Besonders Vorteilhaft ist, wenn der Reversiermotor eine Ankerwelle mit einem Schneckengewinde aufweist. Schneckengewinde sind leicht und billig zu fertigen und in der Lage hohe Kräfte zu übertragen. Außerdem wird durch die Selbsthemmung des Schneckengetriebes vermieden, daß die Wischer von außen verstellt werden.

Weiterhin ist es vorteilhaft, wenn das Schneckengetriebe parallel zum Zugmittel angeordnet ist, da in diesem Fall die Ankerwelle mit dem Schneckengetriebe in ihrer Arbeitsrichtung der Arbeitsrichtung des Zugmittels entspricht.

Ist darüber hinaus das Zugmittel direkt am der Spindelmutter des Schneckengewindes befestigt, wird die Motorkraft ohne große Reibverluste übertragen.

Sind die Wischerwellen, an denen die Wischer befestigt sind, mit Führungsringen versehen, so kann das Zugmittel in sich geschlossen ausgebildet und von der Spindelmutter über die Führungsringe zurück zur Spindelmutter geführt werden, wodurch sich eine hohe Flexibilität der Scheibenwischeinrichtung ergibt.

Sind mehrere Wischerwellen mit jeweils unterschiedlichen Führungsringen vorgesehen, so ist es von besonderem Vorteil, wenn die Führungsringe unterschiedliche Radien aufweisen. Auf diese Weise können unterschiedliche Wischwinkel für die jeweiligen Wischer erreicht werden.

Weiterhin ist es von besonderem Vorteil, wenn die Spindelmutter durch Kugellager linear geführt ist, da so die auf die Ankerwelle wirkenden Querkräfte aaufgenommen werden können.

Ist als Zugmittel ein insbesondere hochfester Draht oder eine Kette vorgesehen, so kann die Scheibenwischeinrichtung auch bei minimalen Platzverhältnissen im Fahrzeug eingebaut werden.

Der Platzbedarf der Scheibenwischereinrichtung kann weiter reduziert werden, wenn die Ankerwelle senkrecht zur Wischerwelle angeordnet ist.

Von besonderem Vorteil ist es, wenn der Elektromotor als elektronisch reversierbarer Elektromotor ausgebildet ist. Diese elektronisch reversierbaren Elektromotoren weisen eine größtmögliche Flexibilität in ihrer Ansteuerung auf, wodurch sich insbesondere auch sehr komplexe Wischaufgaben bewältigen lassen.

Durch die Führung des Zugmittels durch ein Hohlrohr ergibt sich ein weiterer Vorteil, da das Zugmittel geschützt von den übrigen Komponenten untergebracht ist und trotzdem der Platzbedarf der Anlage kleinstmöglich gehalten wird.

Werden darüber hinaus der Elektromotor und die Wischerwelle mit ihren Führungsringen einzeln am Kraftfahrzeug, an der Fahrzeugkarosserie befestigt, derart, daß sie nur über das Zugmittel direkt verbunden sind, wird eine maximale Flexibilität durch den Wegfall des üblichen Gestänges erreicht.

Weiterhin ist es vorteilhaft, wenn die Ankerwelle als Hohlwelle ausgebildet ist und das Zugmittel dabei durch die Ankerwelle hindurch geführt ist. So ergibt sich eine momentenfreie Lagerung der Spindelmutter auf der Ankerwelle, wodurch sich eine geringere Beanspruchung der Ankerwelle ergibt, was sich positiv auf die Lebensdauer der Ankerwellenlager auswirkt.

### Zeichnung

Ausführungsbeispiele der Erfindung sind in den Zeichnungen dargestellt und in der nachfolgenden Beschreibung näher erläutert. Es zeigen:
Figur 1 eine erfindungsgemäße Scheibenwischvorrichtung in einer schematischen Darstellung,
Figur 2 ein Motorteil einer erfindungsgemäßen Scheibenwischeinrichtung in schematischer Darstellung und
Figur 3 eine Variation der in Figur 2 dargestellten Ausführung.

### Beschreibung der Ausführungsbeispiele

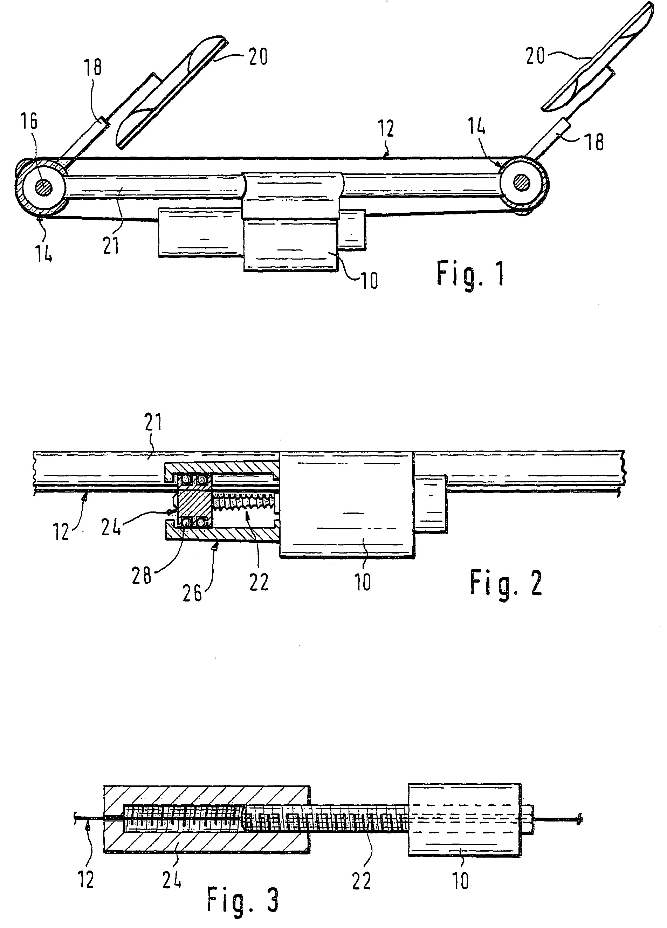

In Figur 1 ist eine Scheibenwischeinrichtung mit einem elektronisch reversierbaren Wischermotor 10 dargestellt. Über ein Zugmittel 12, welches als hochfester Draht ausgebildet ist, werden die Führungsringe 14 und damit die Wischerwellen 16 gedreht. Mit den Wischerwellen 16 sind die Wischarme 18, welche die Wischer 20 tragen, drehfest verbunden. Die Wischerwellen 16 werden jeweils an den beiden Enden eines Rohrträgers 21 gelagert, in dessen mittleren Bereich auch der Wischermotor 10 befestigt ist. Dieser treibt über ein Getriebe, bestehend aus den Führungsringen 14 und dem Zugmittel 12, die Wischerwellen 16 an.

In Figur 2 ist das Motorteil der Scheibenwischeinrichtung im Detail dargestellt. Der Wischermotor 10 treibt die Ankerwelle 22 an, welche mit der Spindelmutter 24 zusammenwirkt. Diese Spindelmutter 24 wird von einer Führung 26 getragen. Dazu weist die Spindelmutter 24 ein Kugellager 28 auf.

Der Wischermotor 10 ist derart ausgebildet, daß das Zugmittel 12 parallel zur Ankerwelle 22 durch ihn hindurch geführt werden kann. Das Zugmittel 12 verläuft parallel zur Ankerwelle 22 und ist mit der Spindelmutter 24 kraftschlüssig verbünden. Dies kann beispielsweise durch Klemmen oder ähnliches erreicht werden.

Im folgenden soll die Funktion der erfindungsgemäßen Scheibenwischeinrichtung erläutert werden. Der reversierbare Elektromotor 10 treibt die Ankerwelle 22 an. Diese ist mit einem Schneckengewinde versehen, auf welches die Spindelmutter 24 aufgeschraubt ist. Da die Spindelmutter 24 drehfest in der Führung 26 verankert ist, ergibt sich bei Drehung der Ankerwelle 22 eine lineare Bewegung der Spindelmutter 24 entlang der Achsrichtung der Ankerwelle 22. Das Zugmittel 12, welches mit der Spindelmutter 24 fest verbunden ist, wird dadurch in Bewegung versetzt.

Durch die Bewegung des Zugmittels 12 wirkt auf die Wischerwellen 16, welche drehfest mit den Führungsringen 14 verbunden sind, ein Moment, das die Wischerwellen 16 und damit die Wischer 20 in Bewegung versetzt.

Da die Bewegung der Wischerwellen 16 nur in einem bestimmten Winkelbereich stattfinden soll, wird der Elektromotor 10 an den jeweiligen Grenzen des Winkelbereichs elektronisch reversiert. Dadurch ergibt sich eine Hin- und Herbewegung der Spindelmutter 24, welche eine Pendelbewegung der Wischerarme 18 und damit der Wischer 20 verursacht.

In Figur 3 ist eine Variation des Motorteils einer erfindungsgemäßen Scheibenwischeinrichtung dargestellt. Die Spindelmutter 24 ist dabei zylinderförmig ausgebildet und stülpt sich hutmutterartig mit ihrem Innengewinde über die Ankerwelle 22 mit dem Schneckengewinde. Die Ankerwelle 22 weist eine axiale Bohrung derart auf, daß eine Hohlwelle entsteht. Das Zugmittel 12 ist am Kopfende der hutmutterartigen Spindelmutter 24 befestigt und durch die Bohrung der Ankerwelle 22 durchgeführt. Auf diese Weise ist eine momentenfreie Lagerung der Spindelmutter möglich. Zweckmäßigerweise kann die Spindelmutter 24 in diesem Fall noch eine Halteeinrichtung aufweisen, die ein Mitdrehen der Spindelmutter 24 mit der Ankerwelle 22 verhindert.

In einer weiteren Variation der erfindungsgemäßen Scheibenwischeinrichtung können die Führungsringe 14 beispielsweise auch als Zahnkränze ausgeführt sein, wobei als Zugmittel 12 in diesem Fall eine Kette dient.

Weiterhin ist es möglich, das Zugmittel 12 mehrere Male um den Führungsring 14 herum zu führen, da so die Reibung zwischen Zugmittel 12 und Führungsring 14 erhöht und dadurch auch das übertragbare Moment erhöht wird.

Um das Zugmittel zu schützen, kann es beispielsweise in einem Hohlrohr untergebracht sein, welches auch Umlenkrollen, zur Umlenkung der Zugmittel 12 beinhalten kann.

Weiterhin ist es möglich, die Wischerwellen 16 mit den Führungsringen 14 und dem Wischermotor 10 an unterschiedlichen Positionen und völlig unabhängig voneinander im Fahrzeug anzuordnen, da nur das Zugmittel 12, eventuell über Umlenkrollen, mit dem Führungsring 14 und damit mit der Wischerwelle 16 in Verbindung stehen muß.

## Patentansprüche

1. Scheibenwischeinrichtung, insbesondere zum Wischen von Scheiben eines Kraftfahrzeugs, mit einem Elektromotor (10), mindestens einer Wischerwelle (16), mit welcher ein Wischer (20) drehfest verbunden ist und einem mindestens ein Zugmittel (12) aufweisenden und damit die Wischerwelle (16) antreibenden Getriebe, **dadurch gekennzeichnet, daß** der Elektromotor (10) als Reversiermotor ausgebildet ist.

2. Scheibenwischeinrichtung nach Anspruch 1, **dadurch gekennzeichnet, daß** der Reversiermotor eine Ankerwelle (22) mit einem Schneckengewinde aufweist.

3. Scheibenwischeinrichtung nach Anspruch 2, **dadurch gekennzeichnet, daß** das Schneckengewinde parallel zum Zugmittel (12) angeordnet ist.

4. Scheibenwischeinrichtung nach Anspruch 2 oder 3, **dadurch gekennzeichnet, daß** das Schneckengewinde mit einer Spindelmutter zusammenwirkt, an welcher das Zugmittel (12) befestigt ist.

5. Scheibenwischeinrichtung nach Anspruch 4, **dadurch gekennzeichnet, daß** die die Wischer (20) tragenden Wischerwellen (16) mit Führungsringen (14) versehen sind, wobei das Zugmittel (12) in sich geschlossen ausgebildet und von der Spindelmutter (14) zumindest über die Führungsringe (14) zurück zur Spindelmutter (14) geführt ist.

6. Scheibenwischeinrichtung nach Anspruch 5, **dadurch gekennzeichnet, daß** mindestens zwei Wischerwellen (16) mit zwei Führungsringen (14) vorgesehen sind und die Führungsringe (14) unterschiedliche Radien aufweisen.

7. Scheibenwischeinrichtung nach einem der Ansprüche 4 bis 6, **dadurch gekennzeichnet, daß** die Spindelmutter durch Kugellager (28) linear geführt ist.

8. Scheibenwischeinrichtung nach einem der vorhergehenden Ansprüche, **dadurch gekennzeichnet, daß** als Zugmittel (12) ein Draht oder eine Kette vorgesehen ist.

9. Scheibenwischeinrichtung nach einem der Ansprüche 2 bis 8, **dadurch gekennzeichnet, daß** die Ankerwelle (22) senkrecht zur Wischerwelle angeordnet ist.

10. Scheibenwischeinrichtung nach einem der vorhergehenden Ansprüche, **dadurch gekennzeichnet, daß** der Elektromotor (10) als elektronisch reversierbarer Elektromotor (10) ausgebildet ist.

11. Scheibenwischeinrichtung nach einem der vorhergehenden Ansprüche, **dadurch gekennzeichnet, daß** das Zugmittel (12) durch ein Hohlrohr geführt ist.

12. Scheibenwischeinrichtung nach einem der vorhergehenden Ansprüche, **dadurch gekennzeichnet, daß** die Wischerwelle (16) und der Elektromotor (10) einzeln am Kraftfahrzeug befestigt und nur über das Zugmittel (12) verbunden sind.

13. Scheibenwischeinrichtung nach einem der Ansprüche 2 oder 12, **dadurch gekennzeichnet, daß** die Ankerwelle (22) als Hohlwelle ausgebildet ist und das Zugmittel (12) durch die Ankerwelle (22) durchgeführt ist.
